# EUROPÄISCHE PATENTSCHRIFT

(11) **EP 1 357 093 B1**
(45) Veröffentlichungstag und Bekanntmachung des Hinweises auf die Patenterteilung: **01.09.2004**
(21) Anmeldenummer: 02076429.6
(22) Anmeldetag: 15.04.2002
(51) Int. Cl.: C04B 28/00, C04B 14/34

(54) **Zusatzstoff zur Verbesserung der bioenergetischen Eigenschaften anorganischer oder organischer Stoffe, insbesondere von mineralischen Baustoffen**
Additive for ameliorating bio-energetic properties of anorganic and organic products, in particular of mineralic building materials
Additif pour l'amélioration de propriétés bio-énergiques de produits anorganiques ou organiques, particulièrement de matériau de construction minéral

(43) Veröffentlichungstag der Anmeldung: 29.10.2003
(73) Patentinhaber: Labor Grieder, 4497 Rünenberg (CH)
(72) Erfinder: Grieder, Karl, 4497 Rünenberg (CH); Flachsmann-Fontalba, Gideon Cajus, 1801 Le Mont-Pèlerin (CH)
(74) Vertreter: D'haemer, Jan Constant

(56) Entgegenhaltungen:
- EP-A- 0 521 286
- DE-A- 3 939 139
- DE-A- 4 308 099
- DE-A- 19 711 473
- FR-A- 2 689 921
- US-A- 4 746 287
- US-A- 5 550 176

## Beschreibung

Die Erfindung betrifft eine Metallmischung in elementarer Form, welche als Zusatz zu anorganischen oder organischen Stoffen deren **bioenergetische** Eigenschaften verbessert. Die Metallmischung wird zusammen mit einem Trägermaterial wie Holzkohle eingesetzt.

Insbesondere betrifft die Erfindung einen Zusatzstoff für zementhaltige mineralische Baustoffe, welcher dadurch gekennzeichnet ist, dass er Kupfer in elementarer und pulverisierter Form oder seine Mischung mit einem oder mehreren Metallen aus der Gruppe Zink, Blei, Zinn, Antimon, Silber und Gold in elementarer und pulverisierter Form und ein Trägermaterial enthält.

Unter **mineralischen Baustoffen** sind Zubereitungen zu verstehen, die als wesentliche Bestandteile mineralische Bindemittel wie Kalk und/oder insbesondere Zement sowie als Zuschläge dienende Sande, Kiese, gebrochene Gesteine oder sonstige Füllstoffe natürlicher oder synthetischer Herkunft enthalten. Die mineralischen Baustoffe werden in der Regel durch Zusammenmischen der mineralischen Bindemittel wie Zement und der Zuschläge zusammen mit Wasser in eine gebrauchsfertige Zubereitung überführt, die sowohl an der Luft als auch unter Wasser aushärtet.

Diese wichtigen mineralischen Baustoffe werden im Wohnungsbau in bezug auf Behaglichkeit und Wohlbefinden oft als problematisch empfunden. So wird beispielsweise in der Patentschrift DE 19623693 der Bauherrschaft empfohlen, generell die Verträglichkeit gegenüber den vorgesehenen Baumaterialien zu überprüfen und problematische Materialien zu vermeiden.

Demgegenüber wird in der vorliegenden Erfindung ein Zusatzstoff beschrieben, der die bioenergetischen Eigenschaften der zementhaltigen mineralischen Baustoffen harmonisiert und somit das Wohlfühlklima des Raumes verbessert.

Der Zusatzstoff soll in den mineralischen Baustoffen homogen verteilt sein. Um eine optimale Durchmischung zu erreichen, wird vorzugsweise der Zusatzstoff mit dem Zement homogen vermischt und dann mit den Zuschlägen vereinigt

Unter den **baubiologischen Eigenschaften** der mineralischen Baustoffe wird insbesondere die bioenergetische Wirkung auf lebende Organismen verstanden. Dieser Einfluss auf Menschen und Tier kann bei Betonbauten, Zementmörteln und zementhaltigen Verputzen und Überzügen nachgewiesen werden, beeinflusst aber auch das Pflanzenwachstum in entsprechendem Umfeld (Treibhaus oder Pflanzen- Behälter).

Zur Untersuchung der bioenergetischen Wirkung der mineralischen Baustoffe können generell biosensible Testmethoden, vorzugsweise Elektroakupunktur eingesetzt werden. Diese Testmethoden sind in der Literatur (z.B. im Buch von Friedrich J. Begher, Einführung in die Elektroakupunktur nach Voll, Medizinisch-literarische Verlagsgesellschaft Uelzen, 1994 ISBN 3-88136-162-6) beschrieben und in der Fachwelt als aussagekräftige Kriterien anerkannt. Mit Hilfe des Elektroakupunkturverfahren nach Voll (EAV) kann ein allfälliger Einfluss von Baustoffen auf das Organ- und Energiesystem des Menschen festgestellt werden. Bei diesem biometrischen Messverfahren wird die Leitfähigkeit des Gewebes an den Akupunkturpunkten der Versuchsperson gemessen. Die Messung gibt Auskunft über den funktionellen Zustand des korrespondierenden Organ- und Energiesystems. Mit Hilfe einer sogenannten Wabe für Medikamententestung kann die Belastung des Organ- und Energiesystems der Testperson durch Baustoffe direkt gemessen werden.

Bei diesem biometrischen Messverfahren wird die Leitfähigkeit des Gewebes an den Akupunkturpunkten der Versuchsperson gemessen. Die Messung gibt Auskunft über den funktionellen Zustand des korrespondierenden Organ- und Energiesystems. Mit Hilfe einer sogenannten Wabe für Medikamententestung kann die Belastung des Organ- und Energiesystems der Testperson durch Baustoffe direkt gemessen werden.

Die Patentschrift DE 2840114 beschreibt ein Verfahren zur Untersuchung biologisch wirksamer elektromagnetischer Strahlungen von anorganischen und organischen Substanzen sowie deren komplexen Verbindungen bezüglich ihrer toxischen und nichttoxischen Quantität und Qualität, ihrer Einwirkungen auf biologische Systeme wie Mineralien, Pflanzen, Tiere und Menschen, sowie sonstige Elemente und deren Verbindungen.

Bei vergleichenden Untersuchungen des Einflusses von Beton ohne und mit dem erfindungsgemäss beschriebenen Zusatzstoff kann der Einfluss auf die menschlichen Meridiane, beziehungsweise auf das entsprechende Organ- und Energiesystem nachgewiesen werden. Es zeigt sich, dass konventioneller Beton je nach Veranlagung unterschiedliche Belastungen auslösen kann, wie z.B. Belastungen des Kreislauf-, Herz-, Lungen- oder Dickdarm-Systems. Diese Belastungen verschwinden jedoch bei Beton mit dem erfindungsgemäss beschriebenen Zusatzstoff.

Der Einfluss des Zusatzstoffs auf das Pflanzenwachstum oder auf die Haltbarkeit von Schnittblumen kann direkt beobachtet werden, indem entsprechende Gefässe aus Beton mit und ohne den beschriebenen Zusatzstoff verwendet werden.

Bei den **Zusatzstoffen** der vorliegende Erfindung handelt es sich um Metalle in elementarer pulverisierter Form, die aus der Gruppe Eisen, Zink, Kupfer, Blei, Zinn, Antimon, Quecksilber, Silber und Gold ausgewählt sind, und vorzugsweise um eine Mischung von Metallen, fein pulverisiert und homogenisiert, vorzugsweise mit Partikelgrössen von <0,1 mm, und gegebenenfalls einem Trägermaterial, vorzugsweise Holzkohle mit geeigneter Partikelgrösse (z.B. <0,1 mm).

Dieser Zusatzstoff wird dem Zement oder dem mineralischen Baustoff zugemischt in Konzentrationen von etwa 0,01 - 20 % g/g, bezogen auf die eingesetzte Zementmenge. Es ist dabei zu berücksichtigen, dass die Metalle des Zusatzstoffes als Spurenelemente im Beton enthalten sein können. Durch den Herstellungsprozess des Zementes wurden diese jedoch oxidiert und entfalten die beschriebene Wirkung nicht mehr.

Ein bevorzugter Zusatzstoff enthält die Metalle in Anteilen von 0,001 bis 15 % und das Trägermaterial in Anteilen von 85 bis 99,999 %. Die bevorzugten Metalle sind Zink, Kupfer, Blei, Zinn, Antimon, Silber und Gold, die bevorzugt alle in unterschiedlichen Mengen enthalten sind.

Es ist bekannt, dass die Verwendung von Holzkohle als Zuschlagsstoff zu mineralischen Baustoffen, deren bautechnisches Verhalten beeinflusst. So können Baustoffe mit verbesserten Wärmedämmeigenschaften oder mit vermindertem spezifischem Gewicht erhalten werden oder die Holzkohle dient als Farbpigment.

Diese bekannten Effekte werden ebenfalls mit der erfindungsgemässen Metallmischung erreicht, wenn Holzkohle als Trägermaterial verwendet wird, wobei zusätzlich eine Verbesserung der bioenergetischen Eigenschaften der Baustoffe erreicht wird .

### Beispiele

### Beispiel 1: Zusatzstoff mit 2 Komponenten

| **Komponente** | **Anteil** | **Bezeichnung** |
|---|---|---|
| B | 25.0 g | Kupfer |
| H | 475.0 g | Holzkohle |
| **Total** | **500.00 g** | **Zusatzstoff** |

Zur Herstellung des Zusatzstoffes wird die Mischung gemahlen und homogenisiert auf eine Partikelgrösse von <0,05 mm.

### Beispiel 2: Zusatzstoff mit 8 Komponenten

| **Komponente** | **Anteil** | **Bezeichnung** |
|---|---|---|
| A | 32.500 g | Zink |
| B | 25.000 g | Kupfer |
| C | 8.000 g | Blei |
| D | 1.250 g | Zinn |
| E | 0.150 g | Antimon |
| F | 0.040 g | Silber |
| G | 0.003 g | Gold |
| H | 433.057 g | Holzkohle |
| **Total** | **500.000 g** | **Zusatzstoff** |

Zur Herstellung des Zusatzstoffs wird die Mischung gemahlen und homogenisiert auf eine Partikelgrösse von <0,05 mm.

### Beispiel 3: Zusammensetzung des Beton

a) konventionell
b)erfindungsgemäss

| **Komponente** | **a) konventionell** | | **b) erfindungsgemäss** | |
|---|---|---|---|---|
| Quarzsand 1,5-3,0 mm | 1485 g | | 1460 g | |
| Kies 3-8 mm | 3765 g | | 3765 g | |
| Kies 8-16 mm | 3330 g | | 3330 g | |
| Total Zuschlagstoffe | | 8580 g | | 8555 g |
| Zusatzstoff gemäss Beispiele 1 oder 2 | | | | 25 g |
| Portlandzement NORMO 4, CEM I 42,5 | | 2475 g | | 2475 g |
| Trinkwasser | | 1238 g | | 1238 g |
| **Total** | | **12293 g** | | **12293 g** |
| | | W/Z=0,50 | | W/Z=0,50 |

### Beispiel 4: Herstellung des Beton

### Geräte

Multi Flow-Rührgerät Typ SE/GB (Elektromotor), Rührbehälter (h = 20,7 cm; d = 40,6 cm)

### Durchführung

a) Beton ohne Zusatzstoff (konventionell)
   Im Rührbehälter werden 2475 g Portlandzement in dem Multi Flow-Rührgerät vorgelegt. Es wird nun die gesamte Menge (8580 g) der Zuschlagstoffe zugegeben und 1 min trocken gemischt. Danach gibt man unter Rühren innerhalb von 30 Sekunden zwei Drittel der berechneten Wassermenge zu. Innerhalb der nächsten 30 Sekunden wird das restliche Drittel Wasser der Mischung zugegeben. Nun rührt man den Beton noch 3 Minuten nach. Die Herstellung der Betonmischung ist nach insgesamt 5 Minuten abgeschlossen.
b) Beton mit Zusatzstoff (erfindungsgemäss)
   Im Rührbehälter werden 25 g des Zusatzstoffs mit 2475 g Portlandzement 1 min trocken mit dem Multi Flow-Rührgerät gemischt. Es wird nun die gesamte Menge (8555 g) der Zuschlagstoffe zugegeben und nochmals 1 min trocken gemischt. Danach gibt man unter Rühren innerhalb von 30 Sekunden zwei Drittel der berechneten Wassermenge zu. Innerhalb der nächsten 30 Sekunden wird das restliche Drittel Wasser der Mischung zugegeben. Nun rührt man den Beton noch 3 Minuten nach. Die Herstellung der Betonmischung ist nach insgesamt 6 Minuten abgeschlossen.

Von den Mischungen a) und b) werden Würfel mit 10 cm Kantenlänge hergestellt und getestet.

### Bioenergetische Prüfungen

### Methode

Die bioenergetische Prüfung der Würfel Beton konventionell und Beton mit Zusatzstoff (erfindungsgemäss) erfolgt mit der Methode der Elektroakupunktur nach Voll (EAV) unter Anwendung des Medikamententestes (Wabe). Die Beherrschung der Methode muss vorausgesetzt werden (siehe das Buch von Friedrich J. Begher, Einführung in die Elektroakupunktur nach Voll (EAV), Verlagsgesellschaft Uelzen, 1994).

Bei der EAV wird die Leitfähigkeit des Gewebes an den Akupunkturmesspunkten der Testperson gemessen. Die Messung gibt Auskunft über den funktionellen Zustand des korrespondierenden Organ- und Energiesystems. Mit Hilfe einer sogenannten Wabe für Medikamententestung kann die Belastung des Organ- und Energie-Systems der Testperson durch Baumaterialien direkt gemessen werden.

### Messprinzip

Das Messprinzip besteht darin, dass durch Anlegen einer kleinen Netzspannung (bis 1 Volt) zwischen einer negativen Hand- und einer positiven Punktelektrode am Messgriffel ein kleiner Strom erzeugt wird (ca. 10 Mikroampere). Normalerweise wird auf der neutralen Haut ein Reaktionsstrom von weniger als 1 Mikroampere abgelesen, aber an den elektrisch differenten Punkten misst man Ströme von 4-100 Mikroampere.

### Die Bewertung der Messwerte

(nach Pitterling H., Naturheilpraxis 10/99, S.1538-1540, Pflaum-Verlag, München)

| **Geräteskala** | **Diagnostische Interpretation** |
|---|---|
| 10 - 20 | Totale Degeneration |
| 20 - 30 | Fortgeschrittene Degeneration |
| 30 - 40 | Fortschreitende Degeneration |
| 40 - 50 | Beginnende Degeneration |
| 50 | Normwert (ideal) |
| 50 - 65 | Toleranzbereich für Norm |
| 65 - 80 | Irritation |
| 80 - 90 | Partielle Entzündung |
| 90 - 100 | Totale Entzündung |

### Der Zeigerabfall (ZA)

Kommt es trotz eines konstanten Elektrodenaufdruckes und einem exakt gesuchten Akupunkturpunkt zu einem ZA, vom vorherigen Höchstwert zu einem niedrigeren Terminalwert, so gilt dieses Phänomen als wichtigstes Kriterium für die Diagnose und Therapie. Die Differenz zwischen dem Höchstwert und dem Zeigerabfall lässt auf den Schweregrad einer Funktions- oder Organstörung schließen.

### Versuchsanordnung für Prüfung des bioenergetischen Einflusses von Beton

Bei den nachfolgend beschriebenen Resultaten wurde die negative Hand-Elektrode in der linken Hand gehalten und an den Messpunkten 1-10 der rechten Hand die EAV-Werte ermittelt. Nach einer Wartezeit von 1 Minute erfolgte eine Wiederholung dieser Messung. Das Ergebnis dieser 2. Messung ergibt den Basiswert. (Tabellen 1-3, Kolonne "Basis-Wert"). Nach einer Wartezeit von 1 Minuten wurde die Wabe für Medikamententestung auf den Würfel **Beton konventionell** aus Beispiel 4 gelegt und an den Messpunkten 1-10 der rechten Hand die EAV-Werte gemessen (Tabellen 1-3, Kolonne "Beton konventionell"). Nach einer Wartezeit von 1 Minuten wurde die Wabe für Medikamententestung auf den Würfel **Beton mit Zusatzstoff (erfindungsgemäss)** aus Beispiel 4 gelegt und an den Messpunkten 1-10 der rechten Hand die EAV-Werte gemessen (Tabellen 1-3, Kolonne "Beton erfindungsgemäss"). Die Dauer einer Messserie beträgt ca. 20 Minuten.

### Tabellen 1 - 3: Typische Prüfungs-Ergebnisse mit EAV-Messungen

**Tabelle 1:**

| Testperson: ♂ 57 Jahre | | | | | |
|---|---|---|---|---|---|
| Quadranten Testpunkte Hand rechts | Belastung auf Organ- und Energiesystem | | | | |
| | Basis-Wert Geräteskala | Abweichung gegenüber Basiswert | | | |
| | | a) Beton konventionell | | b) Beton erfindungsgemäss | |
| | | kein Einfluss¹ | Abweichung > 10% | kein Einfluss¹ | Abweichung > 10% |
| Lymph Meridian | 49 | √ | | √ | |
| Lungen Meridian | 53 | | -7 | √ | |
| Dickdarm Meridian | 56 | √ | | √ | |
| Nervale Degeneration | 56 | √ | | √ | |
| Kreislauf Meridian | 49 | | ZA 44/38 | √ | |
| Allergie Meridian | 51 | √ | | √ | |
| Organ Degeneration | 49 | | ZA 48/34 | √ | |
| Endokriner Meridian | 54 | | +6 | √ | |
| Herz Meridian | 48 | | ZA 52/44 | √ | |
| Dünndarm Meridian | 52 | √ | | √ | |

**Tabelle 2:**

| Testperson: ♂ 72 Jahre | | | | | |
|---|---|---|---|---|---|
| Quadranten Testpunkte Hand rechts | Belastung auf Organ- und Energiesystem | | | | |
| | Basis-Wert Geräteskala | Abweichung gegenüber Basiswert | | | |
| | | a) Beton konventionell | | b) Beton erfindungsgemäss | |
| | | kein Einfluss¹ | Abweichung > 10% | kein Einfluss¹ | Abweichung > 10% |
| Lymph Meridian | 47 | √ | | √ | |
| Lungen Meridian | 44 | √ | | √ | |
| Dickdarm Meridian | 46 | √ | | √ | |
| Nervale Degeneration | 47 | √ | | √ | |
| Kreislauf Meridian | 49 | √ | | √ | |
| Allergie Meridian | 54 | √ | | √ | |
| Organ Degeneration | 48 | √ | | √ | |
| Endokriner Meridian | 48 | √ | | √ | |
| Herz Meridian | 44 | | +6 | √ | |
| Dünndarm Meridian | 50 | | +12 | √ | |

**Tabelle 3:**

| Testperson: ♀ 3½ Jahre | | | | | |
|---|---|---|---|---|---|
| Quadranten Testpunkte Hand rechts | Belastung auf Organ- und Energiesystem | | | | |
| | Basis-Wert Geräteskala | Abweichung gegenüber Basiswert | | | |
| | | a) Beton konventionell | | b) Beton erfindungsgemäss | |
| | | kein Einfluss¹ | Abweichung > 10% | kein Einfluss¹ | Abweichung > 10% |
| Lymph Meridian | 62 | √ | | √ | |
| Lungen Meridian | 58 | √ | | √ | |
| Dickdarm Meridian | 50 | | -6 | √ | |
| Nervale Degeneration | 42 | | +7 | √ | |
| Kreislauf Meridian | 51 | √ | | √ | |
| Allergie Meridian | 50 | √ | | √ | |
| Organ Degeneration | 52 | √ | | √ | |
| Endokriner Meridian | 50 | √ | | √ | |
| Herz Meridian | 51 | √ | | √ | |
| Dünndarm Meridian | 55 | √ | | √ | |

| | | | | | |
|---|---|---|---|---|---|
| Versuchsanordnung: Für den Basiswert wurde die Testwabe abgekoppelt, zur Ermittlung der Belastung mit Beton konventionell bzw. Beton erfindungsgemäss wurde die angekoppelte Testwabe auf den entsprechenden Betonprüfling gelegt. ¹kein Einfluss: Abweichung gegenüber Basiswert < 10% ZA: Zeigerabfall mit Höchstwert und Terminalwert | | | | | |

## Patentansprüche

1. Zusatzstoff für zementhaltige mineralische Baustoffe, **dadurch gekennzeichnet, dass** er Kupfer in elementarer und pulverisierter Form oder seine Mischung mit einem oder mehreren Metallen aus der Gruppe Zink, Blei, Zinn, Antimon, Silber und Gold in elementarer und pulverisierter Form und ein Trägermaterial enthält.

2. Zusatzstoff gemäss Anspruch 1, **dadurch gekennzeichnet, dass** er die Metalle Zink, Kupfer, Blei, Zinn, Antimon, Silber und Gold in unterschiedlichen Mengen enthält.

3. Zusatzstoff gemäss Anspruch 1 oder 2, **dadurch gekennzeichnet, dass** die Metalle eine Partikelgösse von <0,1 mm aufweisen.

4. Zusatzstoff gemäss einem der Ansprüche 1 bis 3, **dadurch gekennzeichnet, dass** er Holzkohle als Trägermaterial enthält.

5. Zusatzstoff gemäss einem der Ansprüche 1 bis 4, **dadurch gekennzeichnet, dass** er Kupfer oder die Metallmischung in Anteilen von 0,001 bis 15 % und das Trägermaterial in Anteilen von 85 bis 99,999 % enthält.

6. Verwendung des Zusatzstoffes gemäss einem der Ansprüche 1-5 zur Herstellung eines mineralischen Baustoffes mit verbesserter bioenergetischen Wirkung.

7. Verwendung gemäss Anspruch 6, **dadurch gekennzeichnet, dass** der Zusatzstoff in Mengen von 0,01 bis 20 Gewichtsprozent, bezogen auf die Zementmenge, eingesetzt wird.

8. Verwendung des Zusatzstoffes gemäss einem der Ansprüche 4 oder 5 zur Herstellung eines mineralischen Baustoffes mit verbesserten Wärmedämmeigenschaften oder mit vermindertem spezifischem Gewicht (Holzkohlen-Leichtbeton) und mit verbesserter bioenergetischen Wirkung.

9. Verwendung des Zusatzstoffes gemäss einem der Ansprüche 4 oder 5 zum Einfärben von mineralischen Baustoffen mit verbesserter bioenergetischen Wirkung.

10. Mineralische Baustoffe mit verbesserter bioenergetischen Wirkung, **dadurch gekennzeichnet, dass** sie einen Zusatzstoff gemäss einem der Ansprüche 1-5 enthalten.

## Claims

1. Additive for cement-containing mineral building materials, **characterised in that** it contains copper in elementary and powder form or a mixture of copper with one or more of the metals zinc, lead, tin, antimony, silver and gold in elementary and powdered form and a support material.

2. Additive in accordance with claim 1, **characterised in that** it contains the metals zinc, copper, lead, tin, antimony, silver and gold in various quantities.

3. Additive in accordance with claims 1 or 2, **characterised in that** the metals have a particle size of <0.1 mm.

4. Additive in accordance with one of claims 1 to 3, **characterised in that** it contains wood charcoal as support material.

5. Additive in accordance with one of claims 1 to 4, **characterised in that** it contains copper or the metal mixture in portions of 0.001 to 15% and the support material in portions of 85 to 99.999%.

6. Use of the additive in accordance with one of claims 1-5 for the production of a mineral building material with improved bio-energetic properties.

7. Use in accordance with claim 6, **characterised in that** the additive is used in quantities from 0.01% to 20 % by weight of the cement quantity.

8. Use of the additive in accordance with one of claims 4 or 5 for the production of a mineral building material with improved thermal insulation properties or with reduced specific gravity (wood charcoal - light concrete) and with improved bio-energetic properties.

9. Use of the additive in accordance with one of claims 4 or 5 to dye mineral building material with improved bio-energetic properties.

10. Mineral building materials with improved bio-energetic properties, **characterised in that** they contain an additive in accordance with one of claims 1-5.

## Revendications

1. Additif pour des matériaux de construction minéraux contenant du ciment, **caractérisé par le fait qu'**il contient du cuivre sous forme élémentaire et pulvérisée ou son mélange avec un ou plusieurs métaux du groupe zinc, plomb, étain, antimoine, argent et or, sous forme élémentaire et pulvérisée, et un matériau porteur.

2. Additif selon la revendication 1, **caractérisé par le fait qu'**il contient du zinc, du cuivre, du plomb, de l'étain, de l'antimoine, de l'argent et de l'or dans des quantités différentes.

3. Additif selon la revendication 1 ou 2, **caractérisé par le fait que** les métaux présentent une taille de particule de <0,1 mm.

4. Additif selon une des revendications 1 à 3, **caractérisé par le fait qu'**il contient du charbon de bois comme matériau porteur.

5. Additif selon une des revendications 1 à 4, **caractérisé par le fait qu'**il contient du cuivre ou le mélange de métaux en proportions de 0,001 à 15%, et le matériau porteur en proportions de 85 à 99,999%.

6. Utilisation de l'additif selon une des revendications de 1 à 5 pour la fabrication d'un matériau de construction minéral avec des propriétés bio-énergetiques améliorées.

7. Utilisation selon la revendication 6, **caractérisé par le fait que** l'additif est utilisé dans des quantités de 0,01 à 20 de pourcentage de poids, par rapport à la quantité de ciment.

8. Utilisation de l'additif selon une des revendications 4 ou 5 pour la fabrication d'un matériau de construction minéral avec des capacités d'isolation thermique améliorées ou avec un poids spécifique moindre (béton léger au charbon de bois) et avec des propriétés bio-énergétiques améliorées.

9. Utilisation de l'additif selon une des revendications 4 ou 5 pour la coloration des matériaux de construction minéraux avec des propriétés bio-énergétiques améliorées.

10. Matériaux de construction avec des propriétés bio-énergétiques améliorées **caractérisé par le fait qu'**ils contiennent un additif selon une des revendications 1 à 5.
